# EUROPEAN PATENT SPECIFICATION

(11) **EP 1 427 228 B1**
(45) Date of publication and mention of the grant of the patent: **18.07.2007**
(21) Application number: 04005676.4
(22) Date of filing: 30.05.2003
(51) Int. Cl.: H04Q 7/22

(54) **Wireless asynchronous response system**
Drahtloses asynchrones Antwortsystem
Système de réponse sans fil asynchrone

(30) Priority: 04.06.2002 US 385631 P; 21.02.2003 US 248814
(43) Date of publication of application: 09.06.2004
(62) Divisional of application: 03394048.7
(73) Proprietor: Fleetwood Group, Inc., Holland, Michigan 49422-1259 (US)
(72) Inventor: Glass, Michael S., Conklin Michigan 49403 (US); Derks, Harry G., Holland Michigan 49423 (US)
(74) Representative: Boyce, Conor

(56) References cited:
- EP-A- 0 926 911
- WO-A-01/84472
- DE-A- 10 021 364
- US-A- 6 038 595

## Description

The present invention is directed to a wireless response system in order to retrieve responses from a group of individuals at a central location. The present invention is useful in classroom settings, in corporate meetings and in other gatherings of individuals. The present invention may be used with as few as tens of users or as many as thousands of users.

It is known to utilize a bi-directional wireless communication between a base unit and a plurality of response units in order to receive at the base unit the response of users, each of which is provided with a response unit. One such system is disclosed in commonly assigned United States Patent Re. 35,449. The system disclosed in Re. '449 is a two-way system. The base unit sends a synchronizing signal to the response units. Each response unit responds in a unique timeframe in response to the synchronizing signals. The central unit acknowledges receipt of a valid response from each of the transmitting response units. Each response unit, upon receipt of an acknowledgement signal, discontinues transmission of the response. It may be desirable to have a wireless response system in which the need for a transmission from the base unit to the response units is no longer required. In such a system, each response unit transmits a signal upon entry of a selection by the user.

Document EP0926911A2 discloses a cellular system in which a plurality of wireless stations send user selections to a base stations using SMS messages; this requires the implementation of a cellular system using the SMS protocol.

Document DE10021364A1 discloses a system in which a plurality of mobile stations communicate with a base station by sending each packet a plurality of times, wherein the repetition interval between packets within a frame and between packets belonging to different frames different frames is different for each base station.

The present invention is directed to a wireless response system that is capable of enhancing reliability in one-way wireless transmission between response units and one or more base units, notwithstanding the use of even thousands of response units at a single location.

The present invention provides a wireless response system according to claim 1. According to the present invention, a wireless response system and method includes providing at least one base unit having a wireless receiver and a plurality of response units. The response units have a wireless transmitter for transmitting a wireless signal to the at least one base unit. The response units asynchronously transmit the wireless signal. The wireless signal may include digital data. The digital data may include an address for the response unit. The wireless transmitter repeatedly transmits the wireless signal spaced apart by a particular interval that is different for the various response units.

The interval may be a function of a number assigned to the transmitting response unit, such as the address for the transmitting response units. The response units may repeatedly transmit the wireless signal in response to a selection made with an input selection device. The digital data may include a selection made with the input selection device. The input selection device may be a keypad.

The interval may be determined by the formula I = A(B - number) + C(number) where I is the interval and A, B and C are constants and "number" is the number assigned to the transmitting response unit. The wireless transmitter may repeatedly transmit the wireless signal for a particular number of transmits. The particular number of transmits may be selectable. The response unit may include an input selection device and the particular number of transmits may be selectable with the input selection device.

The input selection device may be a keypad. The digital data may further include a sync byte. The digital data may further include an error correction code. The wireless signal may be either a radio frequency signal or an infrared signal.

In one embodiment of the invention, there is provided a wireless response system and method for retrieving user responses in a user-occupied area which accommodates a multiplicity of users includes providing a plurality of base units that are dispersed over the user-occupied area. The base units have a wireless receiver for receiving wireless signals. A multiplicity of response units are provided having an address that distinguishes individual ones of the response units. The response units have an input selection device for receiving the user selection and a wireless transmitter for asynchronistically transmitting a wireless signal to the base units. The wireless signals include digital data. The digital data includes an address to the response unit and a selection made with the input selection device. A computer system is provided that includes a communication system for retrieving user selection from base units. User selections may be retrieved from the response units by base units that are capable of receiving response signals and the user selections are identified by the address irrespective of which base unit receives a particular wireless signal.

The wireless communications system may be a hub-and-spoke network that may be hardwired, such as an Ethernet system, or a wireless network. The wireless transmitter may repeatedly transmit the wireless signals based in part by particular intervals that are different from the other response units. The particular intervals may be a function of the address of the transmitting response unit.

At least one of the base units may be capable of receiving wireless signals at different communication channels. The digital data for at least some of the response units may include a channel indication which indicates on which of the channels that response unit is transmitting. The at least one base unit may decode the wireless signals received by the wireless receiver and determine whether the channel indication of the wireless signal matches the communication channel on which the wireless signal is received. The at least one base unit may accept wireless signals for which the channel indication of the receiver signal matches the communication channel that the wireless signal is received on and may not accept wireless signals for which the channel indication of the received signal does not match the communication channel that the wireless signal is received on. The digital data may further include an address for the response unit. The digital data may further include a sync byte. The digital data may further include an error detection code. The wireless signal may be either a radio frequency signal or an infrared signal. The response units may further include an input selection device. The digital data may include a selection made with the input selection device. The input selection device may be a keypad.

Embodiments of the invention will now be described by way of example, with reference to the accompanying drawings, in which:
Fig. 1a is a block diagram of a wireless response system, according to the invention;
Fig. 1b is the same view of the response system in Fig. 1a configured in a different manner;
Fig. 1c is the same view of the response system in Fig. 1a configured in a different manner;
Fig. 2 is a flowchart of a program carried out by a response unit; and
Fig. 3 is a flowchart of a program carried out by a base unit.

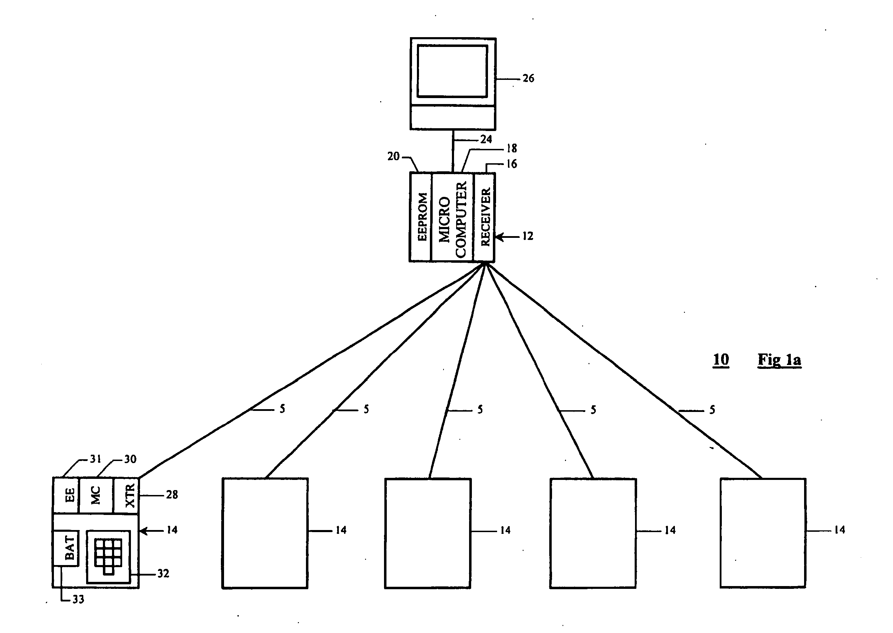

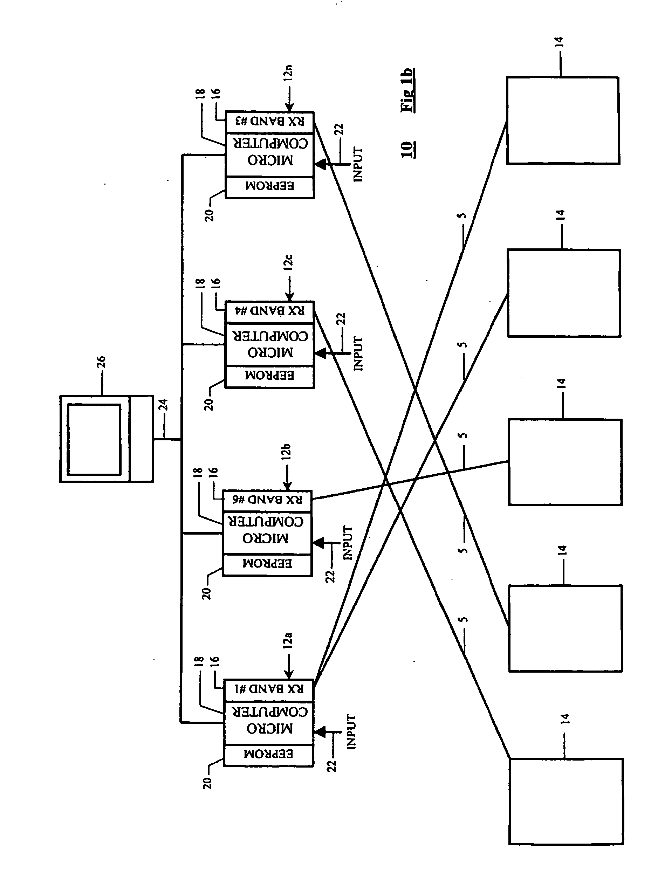

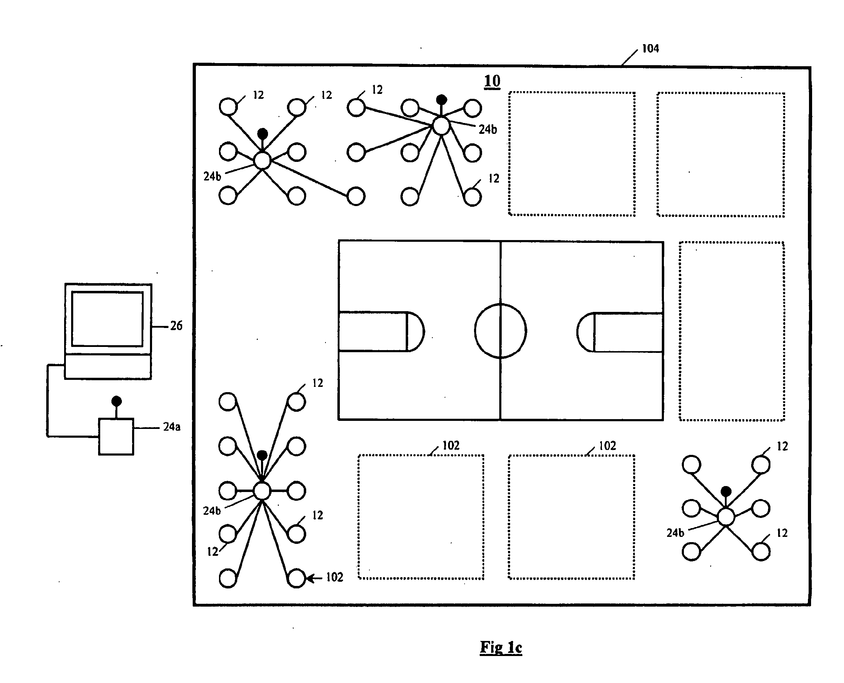

Referring now specifically to the drawings, and the illustrative embodiments depicted therein, a wireless response system 10 includes one or more base units 12 and a plurality of remote response units, or response units, 14 (Fig. 1a). Response units 14 transmit a wireless signal S to one or more base units 12. Wireless signal S may be a radio frequency signal transmitted between a receiver (not shown) in the response unit 14 and a receiver 16 in base unit 12. The advantage of radio frequency signals is that they may have improved directional capabilities. If a radio frequency signal is used, it may be encoded with data bits using leading edge-to-leading edge timing or trailing edge-to-trailing edge timing as disclosed in commonly assigned United States Patent 5,724,357. However, other encoding techniques may be utilized. Wireless signal S may alternatively be an infrared signal, which is transmitted with a light-emitting diode in response unit 14 and a light sensor in response unit 12. Known encoding techniques may be utilized with an infrared system.

Especially when a large number of response units 14 are utilized, such as hundreds or thousands of units, it may be desirable to have multiple base units 12a, 12b, 12c ... 12n each receiving signals in a communication band that is distinguishable from the communication bands of the other base units as illustrated in Fig. 1b. Alternatively, multiple receivers 16 may be included in an individual base unit. Base unit(s) 12 may include a microcomputer 18 and a storage device, such as an EEPROM 20. An input 22 may be used to modify settings, which are stored in EEPROM 20. For example, input 22 may be used to select a communication channel, or band, that the particular receiver 16 is receiving on. The communication channel for the particular receiver 16 would be stored along with other settings in EEPROM 20. As would be understood by those skilled in the art, each communication channel would be a distinct set of frequencies that are distinguishable from the frequencies of other channels 16. Base unit(s) 12 includes a serial port 24, which supplies serial data to a personal computer 26. Computer 26 compiles data received from serial port 24, which is received from response units 14 by base unit(s) 12.

Response units 14 include a transmitter 28 and a microcomputer 30. Transmitter 28 transmits wireless signal S. Microcomputer 30 controls transmitter 28. Each response unit 14 may include an input device, such as a keypad 32, in order to receive input selections. Microcomputer 30 receives inputs from keypad 32 and causes transmitter 28 to transmit signal S. Response units 14 may further include a storage media, such as an EEPROM 31, for storing settings in a nonvolatile manner. Response units 14 further include a battery 33 to provide a portable power source.

An example where the use of multiple communication channels are useful is in a seminar having multiple breakout groups each of which may be supplied with an individual base unit set at a channel different from the other base units. Such a system can be set up in separate rooms or in separate groups within a room. Another example may be if two unrelated organizations are sharing a common convention facility where it may be desirable to have one or more base units for one organization operating on one or more communication channels that are different from the communication channel(s) for the other organization. This inhibits cross talk between organizations. Other examples may suggest themselves to the skilled artisan.

The present invention may be embodied in a response system 10 that is usable with a very large group such as thousands and even tens of thousands of users as illustrated in Fig. 1c. System 10 may be used in a large facility 104, such as a convention center, arena, stadium or the like. The system may include a large number of base units 12 which are in communication with a computer system 26 by way of communication systems generally illustrated as 24a and 24b. The communication system may include a network hub 24b which communicates with a plurality of base units 12 through a router 24a. Communication system 24a, 24b may be a hardwired network, such as an Ethernet network, a wireless network, or the like. If a wireless network, the frequency of the wireless network would be different than the frequency of the wireless signals received by base units 12. For convenience, a hub 24b and a series of base units 12 connected with that hub may be thought of as a grouping 102 with the groupings spread throughout the arena 104. Many, if not all, of base units 12 may be operational on a common channel. A multiplicity of response units (not shown in Fig. 1c) each include unique addresses. Wherever a particular response unit is within arena 104, it would supply a wireless signal in response to actuation of a key in keypad 32 that would be received by one or more base units 12, but not all base units 12. Therefore, some of the wireless signals of some of the response units will be received by some of the base units, but other base units will receive wireless signals from other response units. Because each base unit 12 does not receive signals from all of the keypads, the collision between wireless signals may be reduced due to the geographic layout of wireless response system 10 in arena 104. However, because each base unit has a unique address, the base unit 12 receiving the wireless signal from that response unit would decode the signal and send the response data to computer system 26 via communication network 24a', 24b'.

By way of example, if 100 base units 12 were each capable of receiving wireless signals from approximately 50 response units, the system in Fig. 1c could accommodate 5,000 response units. The ability to supply 5,000 unique addresses merely requires a longer address. This is merely for illustration only. Systems with fewer than or greater than these numbers could be accommodated. However, the ability to mitigate collisions is due in part to the geographic separation of the base units and the fact that they will only interact on near field basis with response units in their geographic vicinity.

In the illustrated of embodiment, hubs 24b' may be 32 port hubs and may be on a wireless Ethernet network operating at the 802.11 standard, which is at a frequency of between 2.4 gigahertz and 5 gigahertz. Wireless transmitter 28 may operate in the illustrated embodiment between 300 and 345 megahertz and 900 megahertz. As can be seen, there would be no conflict between the different wireless systems.

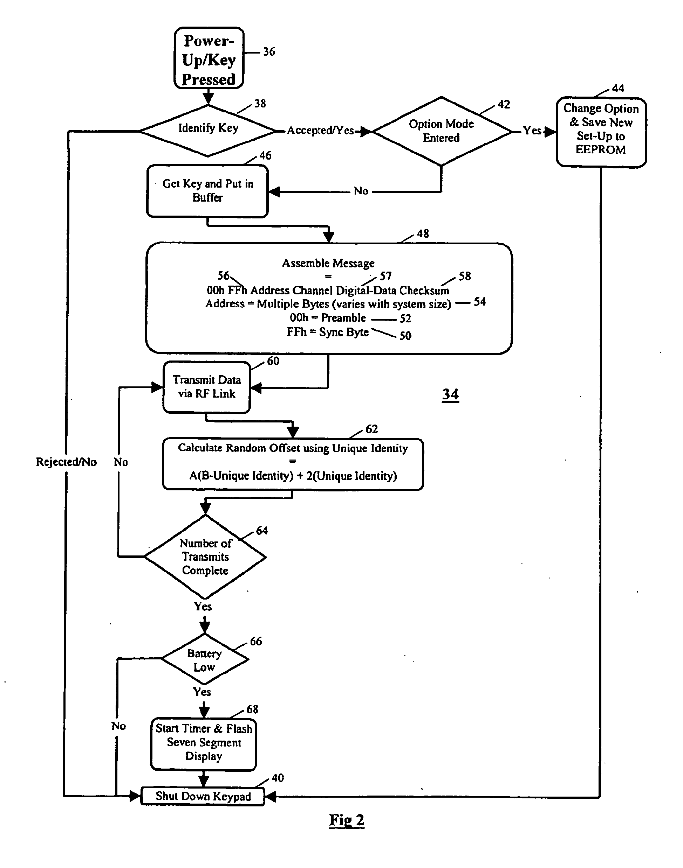

Wireless response system 10 includes a response unit program 34 (Fig. 2). Response unit program 34 may be carried out by microcomputer 30. Program 34 is initiated when a user makes a selection, such as by pressing, at 36, one of the keys of keypad 32. The system then identifies at 38 the key that was pressed. If it is determined at 38 that the key that was pressed was not a valid key, the keypad is shutdown at 40. An invalid key may be one that is set to be not usable for a particular exercise, or the like.

If it is determined at 38 that a valid key has been entered, it is determined at 42 whether the key entered was the key, or keys, requesting entry of the options mode. If so, the user is provided with menus at 44 for changing the options and for saving the new settings to EEPROM 31. If it is determined at 42 that the identified key, or keys, is not for entering the options mode, the key is placed in a buffer at 46. Microcomputer 30 then assembles a message at 48. The message may be comprised of digital data that includes a sync byte at 50 in order to indicate the beginning of a transmission and a preamble at 52 in order to provide time for the receiver 16 to settle. The digital data may further include an address 54 that is assigned to that response unit. The message may further include a channel identifier 56 for the channel to which the particular response unit is set up for, and key press information 57 indicates which selection was made by the user with keypad 32. The message then concludes with an error detection code 58 in order to provide parity. Examples of error detection codes include CHECKSUM, CRC, and the like.

After the message is assembled at 48, the digital data is transmitted at 60 by transmitter 28. A generally random offset is determined at 62. The random offset may be calculated from a number assigned to the particular responding unit, such as, for example, the keypad address for the response unit. The offset, or interval, is calculated using the equation A x (B - number) + C x (number). A, B and C are constants and "number" is the number assigned to the transmitting response unit. This equation provides adequate intervals between transmissions without unduly extending the interval. In the illustrative embodiment, A is 15, B is 50 and C is 2. However, other constants and other equations may be used. The purpose of the random offset calculation is in order to determine a time interval after which the transmission will be repeated. By having the random offset based upon a number assigned to the transmitting unit, such as the keypad address for the particular response unit, the offset will be different for each response unit. Therefore, even if transmissions collide between two response units, the next transmission by those units should be non-colliding because of the difference in the offset time intervals. It should be understood that other techniques might be used to calculate a different offset for most or all of the response units. However, the calculating of offset as a function of the address for that unit provides a convenient technique for assigning intervals to each response unit. This is because each unit already has an address that is different from other response units.

After the random offset is calculated at 62, it is determined at 64 whether a number of transmits have been completed. If not, the program returns to 60 for another transmission of the assembled message. The number of repeat transmits may be established within EEPROM 31. The number of complete transmits may be stored in the EEPROM 31 as part of the setup mode 44. This would allow a user to change the number of repeat transmissions as a function of the environment in which the unit is set up. For example, if system 10 is being used in an environment with a large number of response units, it may be desirable to repeat the number of transmissions in order to avoid conflicts. Also, in environments that are susceptible to electromagnetic interference (EMI), it may be desirable to set a larger number of retransmissions. Other examples will suggest themselves to those skilled in the art.

After the number of transmissions is complete at 64, the condition of battery 33 is examined at 66. If it is determined that the battery is low on charge, an indicator is set at 68. The indicator may be a flashing of display segments or other known indications, such as illumination of an LED, or the like. The keypad is then shutdown at 40 awaiting a further key press at 36.

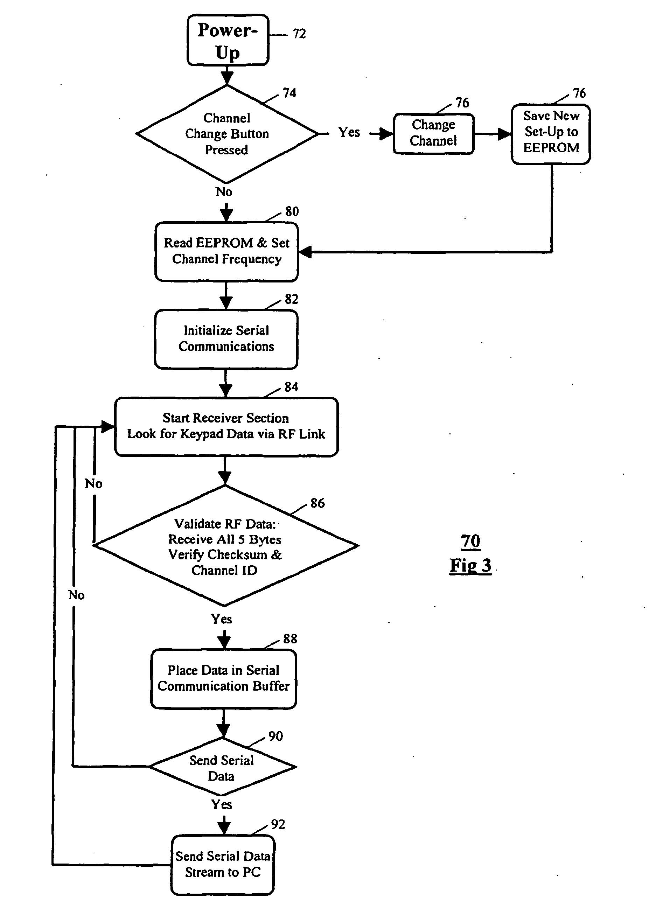

Base unit(s) 12 performs a base control program 70 (Fig. 3). Program 70 begins when the particular base unit(s) is powered up at 72. It is determined at 74 whether the channel change button 22 has been pressed. If so, the channel is then changed at 76 and the new channel setting is saved in EEPROM 20 at 78. The change in channel at 76 changes the frequency band with which the particular receiver 16 is tuned for receiving a signal S. By changing the channel at 76, the frequency band for that signal is changed.

If it is determined at 74 that the channel change has not been pressed, the channel is read at 80 from EEPROM 20 and a channel frequency is set for that receiver 16. Serial communications over serial line 24 are initialized at 82 and receiver section 16 is set to receive at 84 assembled messages 48 sent via RF signal S.

It is then determined at 86 whether a valid RF signal has been received. This is determined by evaluating the number of bytes received, verifying that the CHECKSUM is correct and that the channel ID is identical with the channel selected for that base unit(s) as stored in EEPROM 20. If valid RF data is received, the decoded data is placed in a serial communication buffer at 88. If valid RF data is not received at 86, the receiver section continues to look for assembled messages at 84 and 86.

After data is placed in serial communication buffer 88, it is determined at 90 whether the serial line is available for sending the serial data to personal computer 26. If so, a serial data stream is sent at 92. If it is determined at 90 that serial data should not be sent, the program returns to 84 where the receiver looks for assembled messages over its communication channel.

Thus, it can be seen that wireless response system 10 is especially useful in reliably retrieving information, at one or more base units, from a plurality of users that is sent asynchronously. By including a channel identifier with the assembled message, a message may be ignored if it is not destined for a particular base unit(s). This reduces the tendency for proximity to a base unit(s) to overwhelm the receiver of that base unit(s). By providing for an offset delay in retransmission of the signal, that is different for each response unit, the ability to overcome transmission collisions is greatly-enhanced. Moreover, the ability to selectively set the number of transmission retries allows for adapting the system to the environment while minimizing unnecessary retries and increasing the reliability of the system.

It should be understood that the various features of wireless response system 10 may be used alone or in combination.

## Claims

1. A wireless response system (10) for retrieving user responses, said system comprising :
at least one base unit (12), said at least one base unit having a wireless receiver (16) arranged to receive wireless signals;
at least one response unit (14), each having an address that distinguishes individual ones of said response units;
each of said at least one response unit (14) having an input selection device (22) arranged to receive a user selection and a wireless transmitter(28) arranged to asynchronously transmit a wireless signal to said at least one base unit (12), said wireless signal comprising digital data, said digital data including an address for the response unit and a selection made with said input selection device (22), wherein said at least one base unit is arranged to retrieve user selections from said wireless signals and to identify the received said user selections by said address, wherein each said wireless transmitter is arranged to repeatedly transmit said wireless signal spaced apart by a particular interval, said interval being different from the particular interval of other of said at least one response unit (14).

2. The wireless response system of claim 1 wherein said interval is a function of a number assigned to the transmitting response unit.

3. The wireless response system of claim 1 wherein said at least one response unit (14) is arranged to repeatedly transmit said wireless signal in response to a selection made with the input selection device (22).

4. The wireless response system of claim 2 wherein said interval is determined at least in part by I = A(B - number) + C(number) where I is the interval, A, B and C are constants and number is said number assigned to the transmitting response unit.

5. The wireless response system of claim 2 wherein said number comprises an address of the transmitting response unit.

6. The wireless response system of claim 1 wherein said wireless transmitter (28) is arranged to repeatedly transmit said wireless signal for a particular number of transmissions.

7. The wireless response system of claim 6 wherein said particular number of transmissions is selectable.

8. The wireless response system of claim 7 wherein said particular number of transmissions is selectable with said input selection device (22).

9. The wireless response system of claim 1 wherein said at least one base unit (12) is arranged to receive wireless signals on different communication channels.

10. A method of retrieving user selections from a plurality of users, comprising:
providing at least one base unit (12) having a wireless receiver (16) for receiving wireless signals;
providing a response unit (14) to each of the plurality of users, said response units having an input selection device (22) and a wireless transmitter (28);
transmitting a wireless signal with said response unit wireless transmitter (28) and receiving the wireless signal with said base unit wireless receiver (16), said wireless signal comprising digital data, said digital data including an address for that response unit and a selection made with said input selection device (22);
retrieving user selections from the received wireless signal and identifying the particular user by said address; and
repeatedly transmitting said wireless signal spaced apart by a particular interval, said interval being different from the particular interval of other of said response units.

11. The method of claim 10 including providing a plurality of base units that are dispersed over a user-occupied area and providing a multiplicity of response units, wherein said user selections are identified by said address irrespective of which base unit receives a particular wireless signal.

## Patentansprüche

1. Drahtloses Antwortsystem (10) zum Abrufen von Benutzerantworten, wobei das genannte System Folgendes umfasst:
wenigstens eine Basiseinheit (12), wobei die genannte wenigstens eine Basiseinheit einen Funkempfänger (16) zum Empfangen von Funksignalen hat;
wenigstens eine Antworteinheit (14), jeweils mit einer Adresse, die individuelle der genannten Antworteinheiten unterscheidet;
wobei jede genannte wenigstens eine Antworteinheit (14) ein Eingabeauswahlgerät (22) zum Empfangen einer Benutzerauswahl und einen Funksender (28) zum asynchronen Senden eines Funksignals zu der genannten wenigstens einen Basiseinheit (12) aufweist, wobei das genannte Funksignal digitale Daten umfasst, wobei die genannten digitalen Daten eine Adresse für die Antworteinheit und eine mit dem genannten Eingabeauswahlgerät (22) getroffene Auswahl beinhalten, wobei die genannte wenigstens eine Basiseinheit die Aufgabe hat, Benutzerauswahlen aus den genannten Funksignalen abzurufen und die genannten empfangenen Benutzerauswahlen anhand der genannten Adresse zu identifizieren, wobei jeder genannte Funksender die Aufgabe hat, das genannte Funksignal um ein bestimmtes Intervall getrennt wiederholt zu senden, wobei sich das genannte Intervall von dem jeweiligen Intervall einer anderen der genannten wenigstens einen Antworteinheiten (14) unterscheidet.

2. Drahtloses Antwortsystem nach Anspruch 1, wobei das genannte Intervall von einer der sendenden Antworteinheit zugewiesenen Nummer abhängig ist.

3. Drahtloses Antwortsystem nach Anspruch 1, wobei die genannte wenigstens eine Antworteinheit (14) die Aufgabe hat, das genannte Funksignal als Reaktion auf eine mit dem Eingabeauswahlgerät (22) getroffene Auswahl wiederholt zu senden.

4. Drahtloses Antwortsystem nach Anspruch 2, wobei das genannte Intervall wenigstens teilweise durch I = A(B - Nummer) + C(Nummer) bestimmt wird, wobei I das Intervall ist, A, B und C Konstanten sind und Nummer die genannte, der sendenden Antworteinheit zugewiesene Nummer ist.

5. Drahtloses Antwortsystem nach Anspruch 2, wobei die genannte Nummer eine Adresse der sendenden Antworteinheit umfasst.

6. Drahtloses Antwortsystem nach Anspruch 1, wobei der genannte Funksender (28) die Aufgabe hat, das genannte Funksignal für eine bestimmte Anzahl von Sendungen wiederholt zu senden.

7. Drahtloses Antwortsystem nach Anspruch 6, wobei die genannte bestimmte Anzahl von Sendungen wählbar ist.

8. Drahtloses Antwortsystem nach Anspruch 7, wobei die genannte bestimmte Anzahl von Sendungen mit dem genannten Eingabeauswahlgerät (22) wählbar ist.

9. Drahtloses Antwortsystem nach Anspruch 1, wobei die genannte wenigstens eine Basiseinheit (12) die Aufgabe hat, Funksignale auf unterschiedlichen Kommunikationskanälen zu empfangen.

10. Verfahren zum Abrufen von Benutzerauswahlen von mehreren Benutzern, das die folgenden Schritte beinhaltet:
Bereitstellen von wenigstens einer Basiseinheit (12) mit einem Funkempfänger (16) zum Empfangen von Funksignalen;
Bereitstellen einer Antworteinheit (14) für jeden der mehreren Benutzer, wobei die genannten Antworteinheiten ein Eingabeauswahlgerät (22) und einen Funksender (28) haben;
Senden eines Funksignals mit dem genannten Antworteinheit-Funksender (28) und Empfangen des Funksignals mit dem genannten Basiseinheit-Funkempfänger (16), wobei das genannte Funksignal digitale Daten beinhaltet, wobei die genannten digitalen Daten eine Adresse für diese Antworteinheit und eine mit dem genannten Eingabeauswahlgerät (22) getroffene Auswahl beinhalten;
Abrufen von Benutzerauswahlen aus dem empfangenen Funksignal und Identifizieren des jeweiligen Benutzers anhand der genannten Adresse; und
wiederholtes Senden des genannten Funksignals um ein bestimmtes Intervall beabstandet, wobei sich das genannte Intervall von dem jeweiligen Intervall von anderen der genannten Antworteinheiten unterscheidet.

11. Verfahren nach Anspruch 10, das das Bereitstellen mehrerer Basiseinheiten, die über einen vom Benutzer belegten Bereich verstreut sind, und das Bereitstellen einer Vielzahl von Antworteinheiten beinhaltet, wobei die genannten Benutzerauswahlen anhand der genannten Adresse identifiziert werden, unabhängig davon, welche Basiseinheit ein bestimmtes Funksignal empfängt.

## Revendications

1. Un système de réponse sans fil (10) destiné à la récupération de réponses d'utilisateur, ledit système comprenant :
au moins une unité de base (12), ladite au moins une unité de base possédant un récepteur sans fil (16) agencé de façon à recevoir des signaux sans fil,
au moins une unité de réponse (14), chaque unité de réponse possédant une adresse qui distingue chaque unité individuelle desdites unités de réponse,
chacune desdites au moins une unité de réponse (14) possédant un dispositif de sélection d'entrée (22) agencé de façon à recevoir une sélection d'utilisateur et un émetteur sans fil (28) agencé de façon à émettre de manière asynchrone un signal sans fil vers ladite au moins une unité de base (12), ledit signal sans fil comprenant des données numériques, lesdites données numériques comprenant une adresse pour l'unité de réponse et une sélection effectuée par ledit dispositif de sélection d'entrée (22) où ladite au moins une unité de base est agencée de façon à récupérer des sélections d'utilisateur desdits signaux sans fil et de façon à identifier lesdites sélections d'utilisateur reçues par ladite adresse, où chaque émetteur sans fil est agencé de façon à émettre de manière répétée ledit signal sans fil, ces signaux étant espacé d'un intervalle particulier, ledit intervalle étant différent de l'intervalle particulier des autres unités de ladite au moins une unité de réponse (14).

2. Le système de réponse sans fil selon la Revendication 1 où ledit intervalle est une fonction d'un numéro attribué à l'unité de réponse émettrice.

3. Le système de réponse sans fil selon la Revendication 1 où ladite au moins une unité de réponse (14) est agencée de façon à émettre de manière répétée ledit signal sans fil en réponse à une sélection effectuée par le dispositif de sélection d'entrée (22).

4. Le système de réponse sans fil selon la Revendication 2 où ledit intervalle est déterminé au moins en partie par I = A (B - numéro) + C (numéro) où 1 est l'intervalle, A, B et C sont des constantes et numéro est ledit numéro attribué à l'unité de réponse émettrice.

5. Le système de réponse sans fil selon la Revendication 2 où ledit numéro comprend une adresse de l'unité de réponse émettrice.

6. Le système de réponse sans fil selon la Revendication 1 où ledit émetteur sans fil (28) est agencé de façon à émettre de manière répétée ledit signal sans fil un nombre particulier d'émissions.

7. Le système de réponse sans fil selon la Revendication 6 où ledit nombre particulier d'émissions est sélectionnable.

8. Le système de réponse sans fil selon la Revendication 7 où ledit nombre particulier d'émissions est sélectionnable par ledit dispositif de sélection d'entrée (22).

9. Le système de réponse sans fil selon la Revendication 1 où ladite au moins une unité de base (12) est agencée de façon à recevoir des signaux sans fil sur différents canaux de communication.

10. Un procédé destiné à la récupération de sélections d'utilisateur provenant d'une pluralité d'utilisateurs, comprenant :
la fourniture d'au moins une unité de base (12) possédant un récepteur sans fil (16) destiné à recevoir des signaux sans fil,
la fourniture d'une unité de réponse (14) à chaque utilisateur de la pluralité d'utilisateurs, lesdites unités de réponse possédant un dispositif de sélection d'entrée (22) et un émetteur sans fil (28),
l'émission d'un signal sans fil par ledit émetteur sans fil de l'unité de réponse (28) et la réception du signal sans fil par ledit récepteur sans fil de l'unité de base (16), ledit signal sans fil comprenant des données numériques, lesdites données numériques comprenant une adresse pour cette unité de réponse et une sélection effectuée par ledit dispositif de sélection d'entrée (22),
la récupération de sélections d'utilisateur dudit signal sans fil reçu et l'identification de l'utilisateur particulier par ladite adresse, et
l'émission de manière répétée dudit signal sans fil espacée d'un intervalle particulier, ledit intervalle étant différent de l'intervalle particulier des autres unités desdites unités de réponse.

11. Le procédé selon la Revendication 10 comprenant la fourniture d'une pluralité d'unités de base qui sont réparties sur une zone occupée par des utilisateurs et la fourniture d'une multiplicité d'unités de réponse, où lesdites sélections d'utilisateur sont identifiées par ladite adresse quelle que soit l'unité de base recevant un signal sans fil particulier.
